# EUROPÄISCHE PATENTSCHRIFT

(11) **EP 2 044 136 B1**
(45) Veröffentlichungstag und Bekanntmachung des Hinweises auf die Patenterteilung: **15.09.2010**
(21) Anmeldenummer: 07764940.8
(22) Anmeldetag: 29.06.2007
(51) Int. Cl.: C08G 18/10, C08G 18/38, C08G 18/66, C08G 18/76

(54) **POLYHARNSTOFF-POLYURETHAN-FORMKÖRPER UND VERFAHREN ZU IHRER HERSTELLUNG**
POLYUREA-POLYURETHANE MOLDINGS AND PROCESS FOR THEIR PRODUCTION
CORPS MOULÉS EN POLYURÉE-POLYURÉTHANNE ET LEUR PROCÉDÉ DE FABRICATION

(30) Priorität: 12.07.2006 DE 102006032187
(43) Veröffentlichungstag der Anmeldung: 08.04.2009
(73) Patentinhaber: Bayer MaterialScience AG, 51368 Leverkusen (DE)
(72) Erfinder: EISEN, Norbert, 50999 Köln (DE); SCHLEIERMACHER, Stephan, 50259 Pulheim (DE)
(86) Internationale Anmeldenummer: PCT/EP2007/005770
(87) Internationale Veröffentlichungsnummer: WO 2008/006472

(56) Entgegenhaltungen:
- EP-A2- 0 265 781
- DE-A1- 10 160 375
- US-A- 5 166 115
- US-A- 5 223 599

## Beschreibung

Die Erfindung betrifft Polyharnstoff-Polyurethan-Formkörper und ein Verfahren zur Herstellung von zellhaltigen oder kompakten Polyharnstoff Polyurethan-Formkörpern durch Umsetzung von organischen Polyisocyanaten, Polyolen und aromatischen Amin-Kettenverlängerern mit Alkylthiogruppen mit verbesserten Eigenschaften bezüglich Schlagzähigkeit, Wärmebeständigkeit, Steifigkeit (quantifiziert über den Biege-E-Modul) und Länge der Injektionsdauer.

Es ist allgemein bekannt, Formkörper aus Polyurethanschaumstoffen herzustellen (z.B. DE-A 119 68 64), indem ein reaktions- und schäumfähiges Gemisch aus organischen Polyisocyanaten, Verbindungen mit gegenüber Isocyanatgruppen reaktiven Gruppen und den üblichen Hilfs- und Zusatzmitteln in eine geschlossene Form eindosiert wird. Unter der Vorgabe einer einfachen Verarbeitung, d.h. mit langer Füllzeit und dem Verzicht auf abrasive Füllstoffe, ließen sich solche Formkörper bisher nur erhalten, wenn nicht zusätzlich sowohl eine hohe Schlagzähigkeit, hohe Steifigkeit als auch eine hohe Wärmebeständigkeit erreicht werden musste.

So beschreibt DE-A 1 694 138 stark vernetzte Integralhartschäume mit hoher Wärmebeständigkeit und Steifigkeit. Die Schlagzähigkeiten dieser Schäume sind allerdings unzureichend. Selbst bei deutlich dichteren Systemen oberhalb 1800 kg/m³, wie in EP-A 0 265 781 beschrieben, besteht für die Schlagzähigkeit mit Blick auf Anwendungen wie den Transportbereich noch Verbesserungsbedarf.

Weitgehend lineare Polyurethan-Systeme zeichnen sich durch hohe Schlagzähigkeiten aus. So beschreibt DE-A 2 513 817 Polyurethane aus höhermolekularen Polyhydroxylverbindungen und Butandiol-1,4 bzw. Ethandiol-1,2 als Kettenverlängerer mit guter Elastizität. Nachteilig ist allerdings, dass eine längere Temperung der frisch produzierten Formteile erforderlich ist, um eine gute Wärmebeständigkeit und Schlagzähigkeit zu gewährleisten. Dies erfordert Investitionen in geräumige Heizschränke oder Kammern und verlängert die zur Herstellung erforderliche Zeit. Weiterhin lassen sich die zu niedrigen Biege-E-Module nur erhöhen, indem den Ausgangskomponenten abrasive Faserfüllstoffe zugesetzt werden. Als Folge müssen Maschinenkomponenten gepanzert sein, richtungsabhängig kann unterschiedliches Verzugsverhalten aushärtender Formteile auftreten, und die Anforderungen an die Wartung verschleißanfälliger Maschinenkomponenten sind höher.

Im Bereich der linearen und gering vernetzten Systeme zielen zahlreiche Entwicklungen darauf ab, die Wärmebeständigkeit der Formkörper über das durch Tempern mögliche Maß zu erhöhen. Der klassische Ansatz besteht darin, Isocyanate und Isocyanatprepolymere, die auch Carbodiimid- und/oder Urethonimingruppen besitzen können (DE-A 2 622 951, DE-A 101 60 375), mit Formulierungen umzusetzen, die einen hohen Anteil von Aminen enthalten. Es kommen hierbei zumeist Dialkyltoluylendiamine zum Einsatz. Zusätzlich werden auch Amin-terminierte Polyether (DE-A 31 47 736) verwendet. In allen Fällen sind die Systeme sehr reaktiv, so dass nur sehr kurze Füllzeiten unter zwei Sekunden möglich sind. Überdies besitzen die Formkörper nur niedrige Biege-E-Module, die erst durch das Verwenden von Füllstoffen angehoben werden können und die die bereits im vorherigen Absatz erwähnten Nachteile mit sich bringen. Weiterhin ist auch bei diesen Formteilen eine Temperung nach Entformung notwendig, um die gewünschten Eigenschaften zu erzielen, und somit ein zusätzlicher Aufwand von Wärmeenergie und entsprechender Lagerkapazität erforderlich.

Als Alternative zu den hoch reaktiven Aminen wird in DE-A 34 07 931 vorgeschlagen, die Amine durch die Wasser-Isocyanat-Reaktion erst in-situ entstehen zu lassen. Zwangsweise bildet sich bei diesem Verfahren allerdings viel Kohlendioxid als Koppelprodukt. Nur hohe Schließkräfte und eine sehr dicht schließende Formtrennlinie können das entstehende Kohlendioxid in der reagierenden Flüssigkeit gelöst halten und verhindern, das das Reaktionsgemisch als Schaum aus der Form hervorquillt. Aus diesen Gründen kommt das Verarbeitungsverfahren nur in Nischenanwendungen zum Einsatz.

Einen anderen Weg beschreibt EP-A 0 647 666. Fertige Polyharnstoffe und Polyhamstoff-Polyurethane werden granuliert, in einer Isocyanatolyse in eine flüssige Form überführt und das erhaltene modifizierte Isocyanat mit gegenüber Isocyanaten reaktiven Formulierungen umgesetzt. Sollte der Weg über die direkte Herstellung solcher Polyharnstoffe oder Polyharnstoff-Polyurethane führen, wäre der technische Aufwand wegen zu vieler Syntheseschritte unwirtschaftlich. Wenn Altstoffe recycelt würden, hinge der Abnehmer von zufällig anfallenden Abfallmengen ab. Überdies erhielte er in größerer Menge keine einheitlichen Altstoffe, so dass seine Produkte keine konstante Qualität behielten. Beides sind aber unverzichtbare Voraussetzungen für den Einsatz in hochwertigen Formteilen, so dass die Methode nicht geeignet ist.

Neben der in-situ Herstellung von Aminen und der Isocyanatolyse von Harnstoffen ist ferner bekannt, Amine mit geringer Reaktivität einzusetzen. In DE-A 1 216 538 werden die aromatischen Amine 4,4'-Methylen-bis-(2-Fluoranilin), 4,4'-Methylen-bis-(2-chloranilin), 4,4'-Methylen-bis-(2-bromanilin), 4,4'-Methylen-bis-(2-nitroanilin) und 4,4'-Diamino-3,3'-dichlordiphenyl verwendet. Ihrem wirtschaftlichen Einsatz stehen allerdings zwei gravierende Nachteile entgegen: Erstens erfordert ihre gesundheitsschädliche Wirkung aufwändige Sicherheitsvorkehrungen und Schutzmaßnahmen und zweitens verlängern sie die Reaktionsgeschwindigkeiten der Systeme auf eine unwirtschaftlich lange Dauer von bis zu 15 und sogar 69 Minuten. Im Gegensatz dazu sind die Reaktionszeiten der Systeme in EP-A 0 026 915, die auf sterisch gehinderten Diaminodiphenyl-Aufgabe war es daher, Polyurethan-Formkörper zur Verfügung zu stellen, die in optimalen Füllzeiten (mehr als 6 Sekunden) für große Schussgewichte hergestellt werden können und hohe Biege-E-Module (über 2000 N/mm²), große Schlagzähigkeiten (größer 60 kJ/m², bevorzugt größer 80 kJ/m²) und hohe Wärmebeständigkeit (über 100°C) aufweisen.

Überraschenderweise konnte diese Aufgabe durch füllstofffreie Polyharnstoff Polyurethan-Formkörper gelöst werden, die mit einer bestimmten Polyolkomponente erhältlich sind.

Gegenstand der Erfindung sind daher Polyhamstoff-Polyurethan-Formkörper, die ein molares Dichteverhältnis von Knotendichte zu Harnstoffgruppendichte von 1:1 bis 8:1 aufweisen, erhältlich aus einer Komponente (A), einer Polyisocyanatkomponente (B) und/oder einer Polyisocyanatprepolymerkomponente (C),
wobei die Komponente (A) aus
(A1) mindestens einem Polyetherpolyol mit einer OH-Zahl von 10 bis 100 und einer Funktionalität F von 1,95-4
(A2) mindestens einem Polyetherpolyol mit einer OH-Zahl von 101 bis 799 und einer Funktionalität F von 1,95-6
(A3) mindestens einem Vernetzerpolyol mit einer OH-Zahl von 800 bis 1200 und einer Funktionalität F von 2-4
(A4) mindestens einem Kettenverlängerungsmittel, das 1 bis 2 Alkylthio-Substituenten an einem aromatischen Ring trägt und sich ableitet von Toluylendiaminen, aromatischen Diaminen auf Basis von Diphenylmethan oder aromatischen Polyaminen auf Basis höherer Homologer von Diphenylmethan, besteht
   und die Polyisocyanatkomponente (B)
(B1) monomere Diphenylmethandiisocyanate und
(B2) höherkernige Homologe der Diphenylmethandiisocyanate enthält,
   und das Polyisocyanatprepolymer (C) erhältlich ist aus
(C1) Polyisocyanaten auf Basis von Diphenylmethandiisocyanaten und gegebenenfalls deren höherkernigen Homologen,
(C1) Polyisocyanaten auf Basis von Diphenylmethandüsocyanaten und gegebenenfalls deren höherkernigen Homologen,
(C2) Polyetherpolyolen.

Unter der "Knotendichte des Polyharnstoff Polyurethans" (Einheit: [mol/kg]) wird die Anzahl der dreiwertigen, permanenten chemischen Vernetzungsstellen des Polyharnstoff Polyurethans in Mole pro Kilogramm Polyharnstoff Polyurethan verstanden. Hierzu werden die Stoffmengen aller Moleküle der Ausgangsrohstoffe des Polyurethanelastomers mit einer höheren Funktionalität als 2 erfasst. Um alle Vernetzungsstellen wie trifunktionelle Vernetzungsstellen behandeln zu können, werden die Funktionalitäten höherfunktioneller Molekülsorten unterschiedlich gewichtet: trifunktionelle Moleküle werden mit 1 gewichtet, tetrafunktionelle mit 2, pentafunktionelle mit 3, hexafunktionelle mit 4 u.s.w. Nach dieser Definition hätte ein Polyurethan aus einer Polyolformulierung bestehend aus einem Polyetherdiol, 1,4-Butandiol, Triethanolamin, Pentaerythrit verschäumt mit einem Gemisch aus 1,21 Gew.-% 2,4'-Diphenylmethandüsocyanat und 98,79 Gew.-% 4,4'-Diphenylmethandüsocyanat eine Knotendichte von 0,69 mol/kg, wie die Berechnung in der nachfolgenden Tabelle 1 beispielhaft zeigt.

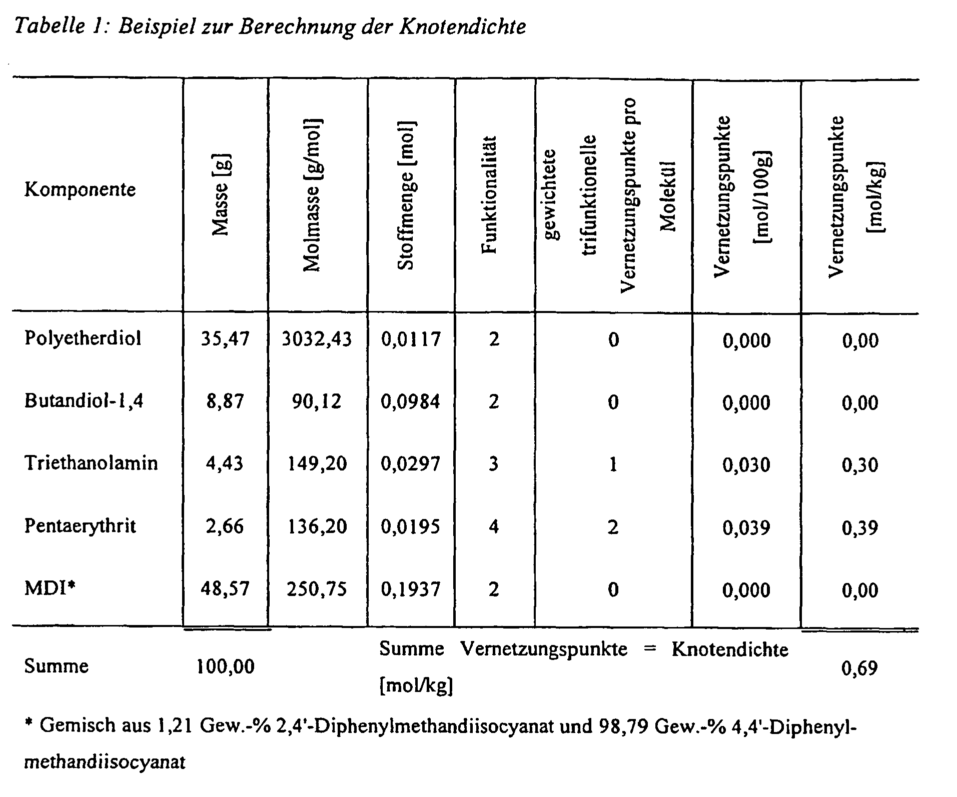

Unter der "Hamstoffgruppendichte der Polyhamstoff-Polyurethane" (Einheit: [mol/kg]) wird die Anzahl der Harnstoffgruppen des Polyhamstoff-Polyurethans in Mole pro Kilogramm des Polyharnstoff-Polyurethans verstanden. Bei äquimolarem Mischungsverhäitnis von Isocyanat und Formulierung errechnet sich die Anzahl der Harnstoffgruppen aus der einfachen Stoffmenge an Wassermolekülen und der Anzahl an Aminen multipliziert mit ihrer Funktionalität. Nach dieser Definition hätte ein Polyharnstoff-Polyurethan, der hergestellt wird durch Verschäumen einer Formulierung bestehend aus Wasser, 6-Methyl-2,4-bis(methylthio)-phenylen-1,3-diamin, Butandiol-1,4 verschäumt mit einem Gemisch aus 1,21 Gew.-% 2,4'-Diphenylmethandiisocyanat und 98,79 Gew.-% 4,4'-Diphenylmethandüsocyanat, eine Harnstoffgruppendichte von 2,24 mol Harnstoffgruppen pro Kilogramm, wie die Berechnung in der nachfolgenden Tabelle 2 beispielhaft zeigt.

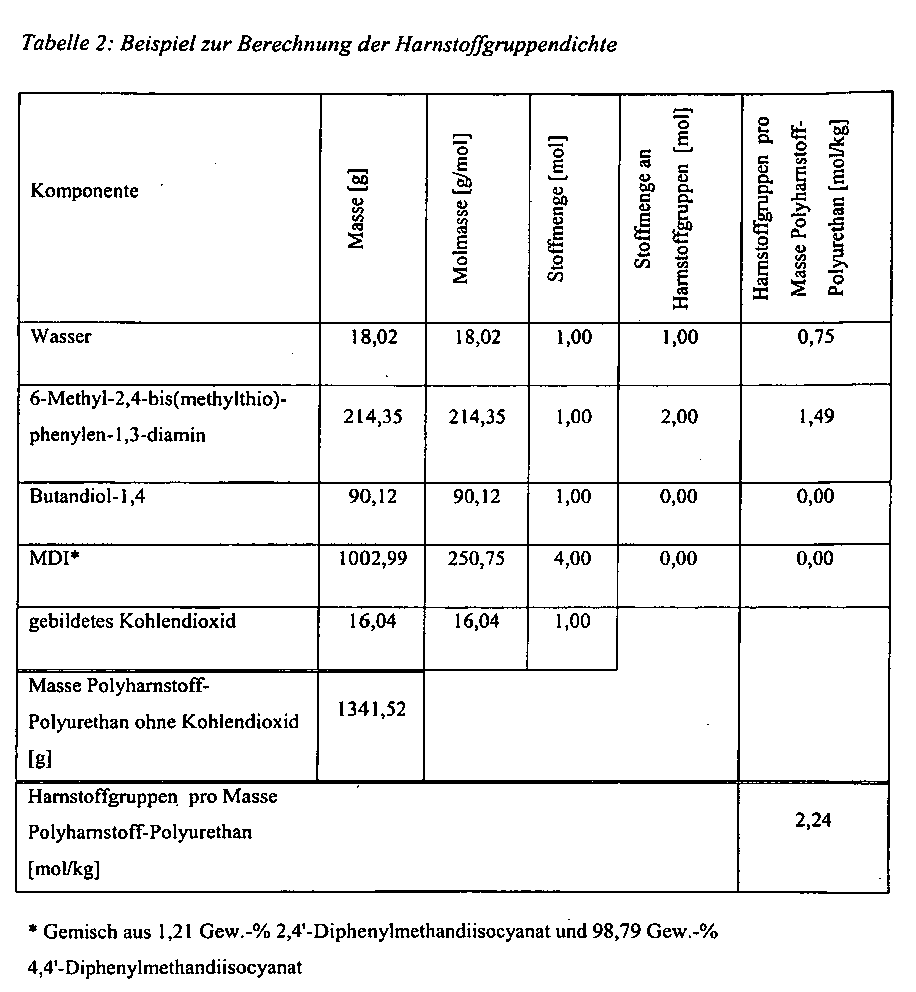

Ein weiterer Gegenstand der Erfindung ist ein Verfahren zur Herstellung von Polyharnstoff Polyurethan-Formkörpern, die ein molares Dichteverhältnis von Knotendichte zu Harnstoff gruppendichte zwischen 1:1 und 8:1 aufweisen, durch Umsetzung einer Komponente (A) mit einer Polyisocyanatkomponente (B) und/oder einem Polyisocyanatprepolymer (C),
wobei die Komponente (A) aus
(A1) mindestens einem Polyetherol mit einer OH-Zahl von 10 bis 100 und einer Funktionalität F von 1,95-4
(A2) mindestens einem Polyetherol mit einer OH-Zahl von 101 bis 799 und einer Funktionalität F von 1,95-6
(A3) mindestens einem Vernetzerpolyol mit einer OH-Zahl von 800 bis 1200 und einer Funktionalität F von 2-4
(A4) mindestens einem Kettenverlängerungsmittel, das 1 bis 2 Alkylthio-Substituenten an einem aromatischen Ring trägt, und sich ableitet von Toluylendiaminen, aromatischen Diaminen auf Basis von Diphenylmethan oder aromatischen Polyaminen auf Basis höherer Homologer von Diphenylmethan, besteht,
   wobei die Polyisocyanatkomponente (B)
(B1) monomere Diphenylmethandüsocyanate,
(B2) höherkernige Homologe der Diphenylmethandüsocyanate enthält und
   wobei das Polyisocyanatprepolymer (C) erhältlich ist aus
(C1) Isocyanaten auf Basis von Diphenylmethandüsocyanaten und gegebenenfalls deren höherkernigen Homologen,
(C2) Polyetherolen.

Die Polyharnstoff-Polyurethan-Formteile werden bevorzugt in Karosserieaußenteilen eingesetzt.

Die Komponente (B1) enthält bevorzugt 4,4'-Diphenylmethandüsocyanat, gegebenenfalls 2,4'-Diphenylmethandüsocyanat und gegebenenfalls 2,2'-Diphenylmethandüsocyanat. Der Anteil des 4,4'-Diphenylmethandüsocyanats beträgt bevorzugt 70 Gew.-% bis 100 Gew.-%, besonders bevorzugt 80 Gew.-% bis 100 Gew.-% bezogen auf das Gesamtgewicht der Komponente (B1). Die Komponente (B1) hat vorzugsweise einen Anteil von 50 Gew.-% bis 100 Gew.-% am Gesamtgewicht der Polyisocyanatkomponente (B).

Die Komponente (B2) besteht aus höherkernigen Homologen der Diphenylmethandüsocyanate und hat vorzugsweise einen Anteil von 0 Gew.-% bis 50 Gew.-% am Gesamtgewicht der Polyisocyanatkomponente (B).

Das Polyisocyanatprepolymer (C) wird auf bekannte Weise hergestellt, indem die Isocyanatkomponente (C1), bevorzugt bei Temperaturen von etwa 80°C, mit der Komponente (C2) zum Polyisocyanatprepolymer (C) umgesetzt wird. Um Nebenreaktionen durch Luftsauerstoff auszuschließen, sollte das Reaktionsgefäß vorzugsweise mit einem Inertgas, vorzugsweise Stickstoff, gespült werden.

Die verwendeten Polyisocyanate (C1) können vorzugsweise auch Anteile bis zu etwa 20 Gew.-%, carbodiimid-, allophanat- oder uretoniminmodifizierter monomerer Diphenylmethandüsocyanate enthalten, wobei Carbodiimid- und/oder Uretonimingruppen bevorzugt sind.

Die Polyetherpolyole (C2) bestehen bevorzugt aus Polyetherdiolen, insbesondere Tripropylenglykol und/oder Dipropylenglykol. Besonders bevorzugt kann die Komponente (C2) Anteile langkettiger Polyetherpolyole mit OH-Zahlen zwischen 10 und 100 enthalten.

Das Mengen-Verhältnis von (C1) und (C2) wird so gewählt, dass der NCO-Gehalt des Prepolymeren (C) 10 bis 25 Gew.-%, vorzugsweise 16 bis 24 Gew.-%, beträgt.

Die Komponente (A) besteht aus
(A1) mindestens einem Polyetherpolyol mit einer OH-Zahl von 10 bis 100,
(A2) mindestens einem Polyetherpolyol mit einer OH-Zahl von 101 bis 799,
(A3) mindestens einem Vernetzerpolyol mit einer OH-Zahl von 800 bis 1200,
(A4) mindestens einem Kettenverlängerungsmittel, das 1 bis 2 Alkylthio-Substituenten an einem aromatischen Ring trägt, und sich ableitet von Toluylendiaminen, aromatischen Diaminen auf Basis von Diphenylmethan oder aromatischen Polyaminen auf Basis höherer Homologer von Diphenylmethan.

Als Komponenten (A1) werden im Rahmen dieser Erfindung Polyetherpolyole verwendet. Sie können nach bekannten Verfahren hergestellt werden, beispielsweise durch Polyinsertion über die DMC-Katalyse von Alkylenoxiden, durch anionische Polymerisation von Alkylenoxiden in Gegenwart von Alkalihydroxiden oder Alkalialkoholaten als Katalysatoren und unter Zusatz mindestens eines Startermoleküls, das 1 bis 6, bevorzugt 2 bis 4 reaktive Wasserstoffatome gebunden enthält, oder durch kationische Polymerisation von Alkylenoxiden in Gegenwart von Lewis-Säuren wie Antimonpentachlorid oder Borfluorid-Etherat. Geeignete Alkylenoxide enthalten 2 bis 4 Kohlenstoffatome im Alkylenrest. Als Startermolekül kommen Wasser oder 1- bis 6-wertige Alkohole in Betracht, wie Ethylenglykol, 1,2-Propandiol und 1,3-Propandiol, Diethylenglykol, Dipropylenglykol, Ethandiol-1,4, Glycerin, Trimethylolpropan oder auch 2 bis 4-wertige Amine, wie Ethylendiamin. Geeignete Alkylenoxide sind beispielsweise Tetrahydrofuran, 1,2-Propylenoxid, 1,2- bzw. 2,3-Butylenoxid, vorzugsweise werden Ethylenoxid und/oder 1,2-Propylenoxid eingesetzt. Die Alkylenoxiden können einzeln, alternierend nacheinander oder als Mischungen verwendet werden. Ferner kann das Ethylenoxid in Mengen von 10 bis 50 % als Ethylenoxid-Endblock eingesetzt werden ("EO-cap"), so dass die entstehenden Polyole überwiegend primäre OH-Endgruppen aufweisen.

Die Polyetherpolyole (A1), besitzen vorzugsweise eine nominale Funktionalität von 1,95 bis 4, bevorzugt 2 bis 3 und besonders bevorzugt 2. Ferner weisen sie eine OH-Zahl von 10 bis 100 auf.

Die Polyetherpolyole (A2) besitzen vorzugsweise eine nominale Funktionalität von 1,95 bis 6, bevorzugt 2 bis 5. Ferner weisen sie eine OH-Zahl von 101 bis 799 auf.

Die Vernetzerpolyole (A3) besitzen vorzugsweise eine nominale Funktionalität von 2 bis 4, bevorzugt 2 bis 3. Ferner weisen sie eine OH-Zahl von 800 bis 1200 auf.

Bei dem Kettenverlängerungsmittel (A4) handelt es sich um aromatische Diamine auf Basis von Diphenylmethan oder aromatischen Polyaminen auf Basis höherer Homologen von Diphenylmethan oder um Toluylendiamine. Zusätzliches Merkmal dieser Amine ist, dass sie jeweils an ihren aromatischen Ringen 1 bis 2 Alkylthio-Substituenten tragen. Bevorzugt sind Dialkylthiotoluylendiamine, die auch Monoalkylthiotoluylendiamine als Nebenbestandteil enthalten können. Besonders bevorzugt sind 3,5-Dimethylthio-2,6-toluylendiamin und 3,5-Dimethylthio-2,4-toluylendiamin sowie Mischungen beider Stoffe.

Vorzugsweise enthält die Komponente (A) 1 Gew.-% bis 25 Gew.-% des Polyetherpolyols (A1), bezogen auf das Gesamtgewicht der Komponenten (A1) bis (A4).

Bevorzugt enthält die Komponente (A) 1 Gew.-% bis 25 Gew.-% des Polyetherpolyols (A2), bezogen auf das Gesamtgewicht der Komponenten (A1) bis (A4).

Bevorzugt enthält die Komponente (A) 1 Gew.-% bis 25 Gew.-% des Vernetzerpolyetherpolyols (A3), bezogen auf das Gesamtgewicht der Komponenten (A1) bis (A4).

Vorzugsweise enthält die Komponente (A) 1 Gew.-% bis 25 Gew.-% des Kettenverlängerers (A4), bezogen auf das Gesamtgewicht der Komponenten (A1) bis (A4).

Die Summe der Komponenten (A1) bis (A4) beträgt 100 Gew.-%.

In einer bevorzugten Ausführungsform können bei der Umsetzung der Komponente (A) mit dem Polyisocyanat (B) und/oder dem Polyisocyanatprepolymer (C) noch ein oder mehrere Additive aus der folgenen Gruppe

In einer bevorzugten Ausführungsform können bei der Umsetzung der Komponente (A) mit dem Polyisocyanat (B) und/oder dem Polyisocyanatprepolymer (C) noch ein oder mehrere Additive aus der folgenen Gruppe
(A6) Katalysatoren,
(A7) Treibmittel,
(A8) Füllstoffe
(A9) Flammschutzmittel
(A10) Trennmittel und
(A11) Zusatzstoffe
zugegeben werden.

Die Additive (A6) bis (A9) können sowohl der Komponente (A) als auch der Komponente (B) und/oder (C) oder separat zugesetzt werden. Bevorzugt werden sie der Komponente (A) zugesetzt.

Als Katalysatoren (A6) werden zur Herstellung der Polyharnstoff Polyurethan insbesondere Verbindungen verwendet, die die Reaktion der Hydroxylgruppen enthaltenden Verbindungen der Komponenten (A1) bis (A3) mit den Polyisocyanatgruppen stark beschleunigen.

In Betracht kommen beispielsweise Zinn(II)verbindungen, wie Zinn(II)-bis(2-ethylhexanoat), Dibutylzinndilaurat, Dibutylzinnbis(dodecanoat), Dibutylzinnoxid, Dibutylzinnsulfid, Dibutylzinn-bis(dodecylthiolat), Dibutylzinndilaurylmercaptid, oder auch andere Metallsalze wie Bismut(III)-carbonsäuresalze, Titanium(IV)-Salze, Alkoxylate und solche mit Acetylacetonato-Liganden. Die Metallverbindungen werden gewöhnlich in Kombination mit stark basischen Aminen eingesetzt. Zu ihnen zählen beispielsweise 1,8-Diazabicyclo[5,4,0]undec-7-en, 1-Methylimidazol, Bis-(2-Dimethylamino-ethyl)-ether, Dimethylcyclohexylamin, N,N-Dimethylbenzylamin, Bis(2-dimethylaminoethyl)methylamin oder vorzugsweise 1,4-Diazobicyclo(2,2,2)-octan (DABCO).

Nach dem erfindungsgemäßen Verfahren werden vorzugsweise kompakte oder mikrozellulare Polyhamstoff-Polyurethane hergestellt. Als Treibmittel (A7) findet bevorzugt Wasser Verwendung, das mit Isocyanaten in situ unter Bildung von Kohlendioxid und Aminogruppen reagiert, die ihrerseits mit weiteren Isocyanatgruppen zu Harnstoffgruppen weiterreagieren und hierbei als Kettenverlängerer wirken. Neben anderen chemischen Treibmitteln, wie Ammoniumcarbamat oder Ammoniumsalzen organischer Carbonsäuren können anstelle von Wasser oder in Kombination mit Wasser auch Gase oder leicht flüchtige anorganische oder organische Substanzen als physikalische Treibmittel eingesetzt werden. Als organische Treibmittel kommen z.B. Aceton, Ethylacetat, halogensubstituierte Alkane oder teilhalogenierte Alkane, wie R134a, R141b, R365mfc, R245fa, ferner Butan, Pentan, Cyclopentan, Hexan, Cyclohexan, Heptan oder Diethylether in Frage und als anorganische Treibmittel z.B. Luft, CO₂ oder N₂O.

Als Füllstoffe (A8) können nicht verstärkend wirkende Stoffe, wie beispielsweise Aluminiumoxid und Titanoxid eingesetzt werden. Bevorzugt werden verstärkend wirkende Schichtsilikate wie beispielsweise Serpentin, Antigorit, Chrysotil, Kaolinit, Halloysit, Talk, Pyrophyllit, Saponit, Montmorillonit, Biotit, Muskovit, Phlogopit und Brucit eingesetzt. Besonders bevorzugt sind Naturfasern, wie beispielsweise Wollastonit, Erionit, Attapulgit, Sepiolith, Flachs und Hanf sowie synthetisch hergestellte Fasern, wie beispielsweise Kohlefasern, Glasfasern oder Quarzfasem.

Die Füllstoffe (A8) werden üblicherweise in Masseanteilen von 1 bis 50 Gew.-%, bezogen auf die Gesamtmasse des Polyharnstoff Polyurethans eingesetzt. Die Gesamtmasse ergibt sich aus den Einzelgewichten der Komponenten und Additive (A1) bis (A10) und (B) und/oder (C).

Geeignete Flammschutzmittel (A9) sind beispielsweise halogenierte Polyetherpolyole, wie z.B. Ixol. Ferner eignen sich halogenierte Phosphate, wie Trikresylphosphat, Tris-2-chlorethylphosphat, Tris-chlorpropylphosphat und Tris-2,3-dibrompropylphosphat. Weiterhin können auch feste anorganische und organische Flammschutzmittel, wie Aluminiumoxidhydrat, Ammoniumpolyphosphat, Melamin und roter Phosphor verwendet werden. Die Flammschutzmittel werden üblicherweise in Masseanteilen von 1 bis 25 Gew.-%, bezogen auf die Gesamtmasse des Polyharnstoff Polyurethans eingesetzt.

Gegebenenfalls zu verwendende Zusatzstoffe (A11) sind oberflächenaktive Substanzen, Schaumstabilisatoren, Inhibitoren, Zellregler, Farbstoffe, Haftvermittler, Alterungsschutzmittel und Pigmente sowie Trennmittel (A10), wie sie in der Fachliteratur beschrieben werden, beispielsweise in "Kunststoff Handbuch", Band 7 "Polyurethane", Günter Oertel, Carl-Hanser Verlag, München - Wien, neu bearbeitete Auflage 1993, Kapitel 3.4.

Die Komponente (A) wird im allgemeinen mit dem Polyisocyanat (B) und/oder mit dem Isocyanatprepolymer (C) so vermischt, dass das molare Äquivalenzverhältnis von NCO-Gruppen zu solchen Gruppen der Komponente (A), die mit Isocyanatgruppen reagieren, 1:0,8 bis 1:1,3 ist. Bevorzugt wird die Komponente (A) sowohl mit dem Polyisocyanat (B) und/oder dem Isocyanatprepolymer (C) im molaren Äquivalenzverhältnis 1:1 1 vermischt.

Die Komponenten (A) und (B) beziehungsweise (C) können nach dem Niederdruck oder Hochdruckverfahren vermischt werden. Das Hochdruckverfahren, auch RIM-Verfahren (reaction injection moulding) genannt, ist bevorzugt.

Als geschlossene Formen können temperierte Epoxidformen oder bevorzugt temperierte Aluminiumformen sowie Stahlformen eingesetzt werden. Die Formtemperatur soll zwischen 55°C und 120°C, bevorzugt von 70°C bis 95°C, besonders bevorzugt zwischen 71°C und 79°C liegen. Die Formstandzeit kann minimal 90 Sekunden betragen. Besonders bevorzugt sind Formstandzeiten oberhalb von 2 Minuten.

Die Komponente (A), das Polyisocyanat (B) und/oder das Isocyanatprepolymer (C) werden auf Temperaturen zwischen 15°C und 80°C temperiert. Bevorzugt sind Temperaturen zwischen 20°C und 50°C.

Hochdruckmaschinen vermischen die Ausgangsstoffe von Polyharnstoff-Polyurethan-Systemen abhängig von der Mischkammergröße des Mischkopfes und der Hochdruckpumpen nur in einem bestimmten Bereich minimaler und maximaler Austragsleistung optimal. Deshalb müssen Produzenten beide Grenzsituationen abwägen. Wenn die Austragleistung einen maschinenspezifischen Schwellwert unterschreitet, werden die Komponenten nur noch ungenügend vermischt. Dann müsste in einer kleineren Maschine verarbeitet werden. Wenn große Formteile gefüllt werden müssen, werden für schnelle Polyharnstoff-Polyurethan-Systeme Maschinen hoher Austragsleistung benötigt, mit denen sich allerdings Polyharnstoff-Polyurethan-Systeme für kleine Teile unterhalb einer bestimmten Austragsleistung nicht mehr ausreichend vermischen lassen.

Ein Vorteil des erfindungsgemäßen Verfahrens ist, das seine Polyharnstoff Polyurethan-Systeme lange dosiert werden können. Folglich können mit Maschinen kleiner Austragleistung sowohl kleine Teile wie auch große Teile mit optimaler Vermischung gefertigt werden. Dies vereinfacht die Produktionsplanung und verringert die Investitionskosten für die Hochdruckmaschinen. Im allgemeinen liegen die Schusszeiten beim erfindungsgemäßen Verfahren zwischen 6 Sekunden und 40 Sekunden, bevorzugt 10 sec bis 25 sec. Herkömmliche Systeme, welche dem Stand der Technik entsprechen, wie Bayflex^{®} 190, Spectrim^{®} HH 390 oder Elastolit^{®} R weisen üblicherweise Schusszeiten unter 4 Sekunden auf.

Zumeist charakterisiert eine einzelne physikalische Eigenschaft einen Werkstoff nur unzureichend. Im allgemeinen kommt es darauf an, dass mehrere verschiedene Eigenschaften zugleich bestimmte Mindestanforderungen erfüllen. Die erfindungsgemäßen Polyharnstoff Polyurethane weisen hier eine besonders vorteilhafte Kombination auf. Sie besitzen eine Wärmeformbeständigkeit nach DIN EN ISO 75-2 von mindestens 100°C, ohne das eine Temperung erforderlich ist. Außerdem besitzen sie eine hohe Schlagzähigkeit nach DIN EN ISO 179 von mindestens 100 kJ/m². Ferner werden Biege-E-Module nach DIN EN ISO 178 von mindestens 2000 N/mm² erreicht, obwohl gegenüber herkömmlichen Systemen, welche dem Stand der Technik entsprechen, wie Bayflex^{®} 190, Spectrim^{®} HH 390 oder Elastolit^{®} R hierzu keine abrasiven Füllstoffe zwingend zugesetzt werden müssen.

Die Erfindung soll anhand der nachfolgenden Beispiele näher erläutert werden.

### Beispiele

In den nachfolgenden Beispielen 1 und 2 wurden erfindungsgemäße Polyharnstoff Polyurethan-Systeme verwendet. Die Beispiele 3 bis 8 sind nicht erfindungsgemäß.

Als Ausgangsverbindungen wurden folgende Komponenten eingesetzt:

| | Aufbau | | | OH-Zahl | F | Molmasse |
|---|---|---|---|---|---|---|
| Komponente 1 | TMP | 20,3 | Gew.-% | ∼ 255 | 3 | ∼ 220 |
| (A2) | PO | 0,877 | Gew.-% | | | |
| | EO | 78,82 | Gew.-% | | | |
| Komponente 2 | PG-1,2 | 1,9 | Gew.-% | ∼ 28 | 2 | ∼ 2000 |
| (A1) | PO | 68,67 | Gew.-% | | | |
| | EO | 29,43 | Gew.-% | | | |
| Komponente 3 | EDA | 16,87 | Gew.-% | V 630 | 4 | ∼ 90 |
| (A2) | PO | 83,13 | Gew.-% | | | |
| Komponente 4 | TMP | 82,01 | Gew.-% | ∼ 1030 | 3 | ∼ 55 |
| (A3) | PO | 17,99 | Gew.-% | | | |
| Komponente 5 (A4) | Ethacure^{®} 300 | | | ∼ 525 | 2 | ∼ 110 |
| Komponente 6 | PG-1,2 | 2,02 | Gew.-% | ∼ 45 | 2,3 | ∼1250 |
| (A1) | TMP | 1,21 | Gew.-% | | | |
| | PO | 96,76 | Gew.-% | | | |
| Komponente 7 (A5) | DETDA | | | ∼630 | 2 | ∼180 |
| Komponente 8 | TMP | 1,543 | Gew.-% | ∼28 | 6 | ∼11800 |
| (A1) | PO | 81,13 | Gew.-% | | | |
| | EO | 17,33 | Gew.-% | | | |
| Komponente 9 | Butylglykol | 17,9 | Gew.-% | ∼85 | 1 | ∼660 |
| (A1) | PO | 82,1 | Gew.-% | | | |
| Additiv 1 (A7) | Wasser | | | 6228 | 2 | 18 |
| Additiv 2 | Tegostab^{®} B8411 | | | ∼100 | 2 | ∼11000 |
| Additiv 3 | Edenor^{®} TI 05 | | | ∼200 | 1 | ∼280 |
| Additiv 4 (A6) | Diazabicyclooctan | | | ∼550 | 2 | |
| Additiv 5 | Polyoxypropylendiamin | | | ∼255 | 2 | ∼440 |
| Isocyanat 1 | 87 Gew.-% 4,4'-MDI und 13 Gew.% TPG; | | | | | |
| | NCO-Gehalt ca. 23 Gew.-%. | | | | | |
| Isocyanat 2 | NCO-Gehalt 31,5 Gew.-%. | | | | | |
| | 44 | Gew.-% | 4,4'-MDI | | | |
| | 4 | Gew.-% | 2,4'-MDI | | | |
| | 1 | Gew.-% | 2,2'-MDI | | | |
| | 30 | Gew.-% | 3 Kern MDI | | | |
| | 13 | Gew.-% | 4 Kern MDI | | | |
| Isocyanat 3 | NCO-Gehalt 31,5 Gew.-%; Prepolymer aus 94,5 Gew.-% MDI und 5,5 Gew.-% eines PG gestarteten Polyethers (mit PO) mit einer OH-Zahl von ca. 510. MDI: | | | | | |
| | 75 | Gew.-% | 4,4'-MDI | | | |
| | 8 | Gew.-% | 2,4'-MDI | | | |
| | 0,4 | Gew.-% | 2,2'-MDI | | | |
| | 17 | Gew.-% | 3 Kern und 4 Kern MDI | | | |
| Isocyanat 4 | NCO-Gehalt 15,5 Gew.-%; Prepolymer aus 53 Gew.-% MDI und 47 Gew.-% eines Glycerin gestarteten Polyethers (mit PO/EO) mit einer OH-Zahl von ca. 48. MDI: | | | | | |
| | 80 | Gew.-% | 4,4'-MDI | | | |
| | 10 | Gew.-% | 2,4'-MDI | | | |
| | 0,5 | Gew.-% | 2,2'-MDI | | | |
| | 10 | Gew.-% | höher funktionelles MDI | | | |

| | | | | | | |
|---|---|---|---|---|---|---|
| TMP = Trimethylolpropan PO = Propylenoxid EO = Ethylenoxid PG = Propylenglykol EDA = Ethylendiamin DETDA = Diethyltoluylendiamin Ethacure^{®} 300 = Dimethylthiotoluylendiamin Tegostab^{®} B 8411 = Polyetherpolysiloxan Copolymer Schaumstabilisator Edenor^{®} TI 05 = Fettsäureester der Firma Cognis MDI = Diphenylmethandiisocyanat | | | | | | |

**Tabelle 3: Rezepturen der Komponente (A) in Gewichtsprozenten**

| | Beispiele | | | | | | | | |
|---|---|---|---|---|---|---|---|---|---|
| | 1 | 2 | 3 | 4 | 5 | 6 | 7a | 8 | 7b*) |
| Komponente 1 | 15,18 | 15,18 | 18,21 | - | - | - | 15,18 | - | 15,18 |
| Komponente 2 | 15,01 | 15,01 | 21,76 | 9,89 | 9,89 | 88,15 | 15,01 | - | 15,01 |
| Komponente 3 | 6,09 | 6,09 | 7,30 | 89,02 | 89,02 | 9,79 | 6,09 | - | 6,09 |
| Komponente 4 | 33,78 | 33,78 | 40,52 | - | - | - | 33,78 | - | 33,78 |
| Komponente 5 | 17,26 | 17,26 | - | - | - | - | 17,26 | - | 17,26 |
| Komponente 6 | 2,5 | 2,5 | - | - | - | - | - | - | - |
| Komponente 7 | - | - | - | - | - | - | 17,26 | 41,5 | 17,26 |
| Komponente 8 | - | - | - | - | - | - | - | 46,39 | - |
| Komponente 9 | 6,70 | 6,70 | 8,04 | - | - | - | 6,70 | - | 6,70 |
| Additiv 1 | 0,16 | 0,16 | 0,19 | 0,1 | 0,1 | 0,1 | 0,16 | - | 0,16 |
| Additiv 2 | 0,79 | 0,79 | 0,95 | 0,99 | 0,99 | 0,98 | 0,79 | 0,88 | 0,79 |
| Additiv 3 | 1,70 | 1,70 | 2,04 | - | - | - | 1,70 | | 1,70 |
| Additiv 4 | 0,83 | 0,40 | 1,00 | - | - | 0,98 | 0,40 | - | 0,40 |
| Additiv 5 | - | - | - | - | - | - | - | 0,7 | - |
| Summe | 100 | 100 | 100 | 100 | 100 | 100 | 100 | 100 | 100 |

| | | | | | | | | | |
|---|---|---|---|---|---|---|---|---|---|
| *) Das Produkt aus Versuch 7a wurde direkt nach Herstellung für zwei Stunden bei 80°C getempert. | | | | | | | | | |

**Tabelle 4: Zusammensetzung der Polyurethane in Gewichtsteilen**

| | Beispiele | | | | | | | | |
|---|---|---|---|---|---|---|---|---|---|
| | 1 | 2 | 3 | 4 | 5 | 6 | 7a | 8 | 7b¹) |
| Komponente (A) | 100 | 100 | 100 | 100 | 100 | 100 | 100 | 100 | 100 |
| Isocyanat 1 | 178 | - | 178 | 187 | - | 32 | 189 | - | 189 |
| Isocyanat 2 | - | - | - | - | 136 | - | - | - | - |
| Isocyanat 3 | - | 145 | - | - | - | - | - | - | - |
| Isocyanat 4 | - | - | - | - | - | - | - | 150 | - |

| | | | | | | | | | |
|---|---|---|---|---|---|---|---|---|---|
| ¹⁾ Das Produkt aus Versuch 7a wurde direkt nach Herstellung für zwei Stunden bei 80°C getempert. | | | | | | | | | |

Die Komponente (A) wurde jeweils mit einem Isocyanat bzw. Prepolymer unter Hochdruck vermischt und in eine geschlossene Form mit einer Formtemperatur von 75°C injiziert. Hierbei wurde das molare Äquivalenzverhältnis von NCO-Gruppen des Isocyanates bzw. Prepolymers zu solchen Gruppen der Komponente (A), die mit Isocyanaten reagieren, auf 1:1 eingestellt. Nach einer Formstandzeit von 3 Minuten wurden die fertigen Formkörper (Prüfkörper) entformt. Es wurden an den Prüfkörpern die Eigenschaften (siehe Tabelle 5) gemessen.

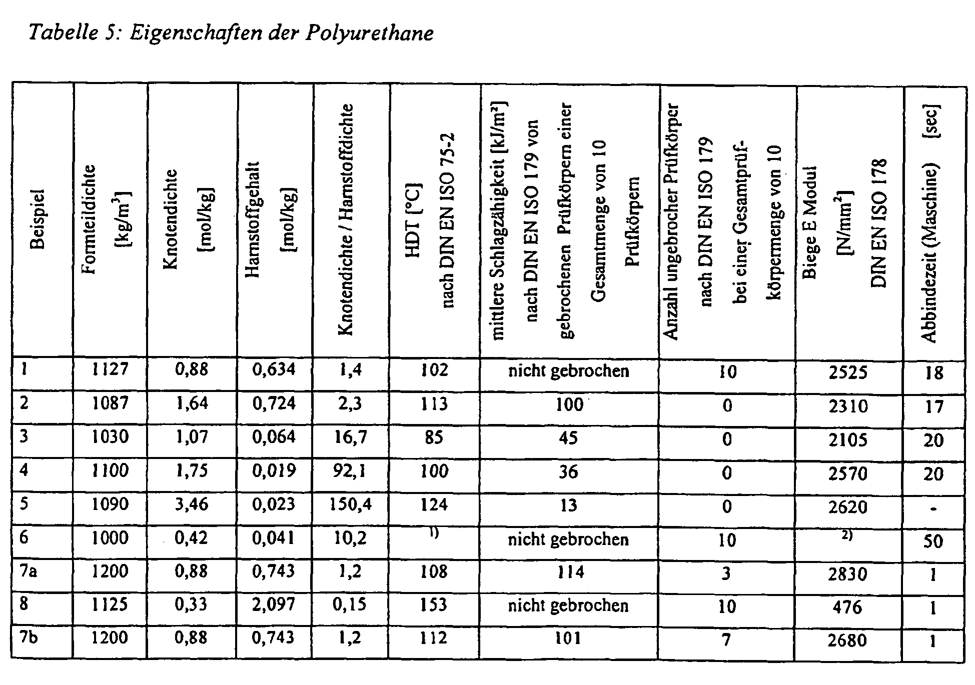

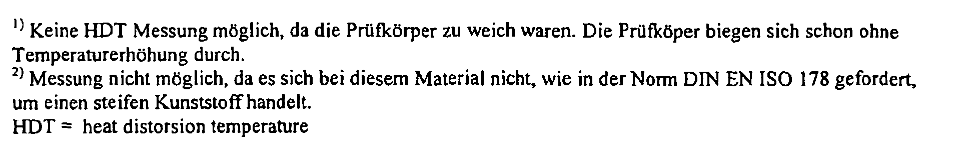

Die erfindungsgemäßen Polyharnstoff-Polyurethan der Beispiele 1 und 2 weisen molare Dichteverhältnisse von 1,4 und 2,3 sowie hohe HDT-Werte von 102°C und 113°C auf. Zugleich besitzen diese Produkte hohe Schlagzähigkeiten von ≥ 100 kJ/m² bzw. sie brechen nicht. Sie weisen zudem sehr hohe Biege-E-Module von 2525 N/mm² bzw. 2310 N/mm². Bemerkenswert sind diese Eigenschaften vor dem Hintergrund der langen Abbindezeiten dieser Systeme, die es erlauben, auch große Kavitäten mit Hochdruckanlagen vergleichsweise geringer Austragsleistung ausreichend schnell zu füllern.

Die nicht erfindungsgemäßen Polyharnstoff Polyurethan verfüllen diese Anforderungen nicht. So besitzen die Produkte der Beispiele 3, 4 und 5 durchgehend zu hohe molare Dichteverhältnisse zwischen 16 und 150. Diese Produkte haben zwar respektable Biege-E-Module von bis zu 2620 N/mm², allerdings fallen die Schlagzähigkeiten um 50% und mehr gegenüber den Beispielen 1 und 2 ab.

Das sehr flexible Produkt des Beispiels 6 besticht zwar durch sehr hohe Schlagzähigkeit (es bricht nicht) und sehr langsame Startzeit von 50 sec, seine Steifigkeit ist jedoch völlig unzureichend. Das molare Dichteverhältnis ist zudem unzureichend. Ähnlich verhält es sich mit dem Produkt aus Beispiel 8. Sein molares Dichteverhältnis ist ebenfalls unzureichend. Die Abbindezeit ist mit etwa 1 Sekunde viel zu schnell, um große Teile mit geringem Maschinenaufwand zu füllen. Zudem ist das Biege-E-Module viel zu niedrig.

Das Produkt aus Beispiel 7a wurde ungetempert vermessen. Das selbe System wurde getempert und danach vermessen (Beispiel 7b). Die Eigenschaften beider Prüfkörper sind zwar gut, allerdings konnten diese guten Eigenschaften nur durch sehr kurze Reaktionszeiten erreicht werden. Der Einsatz für große Formteile ist daher ausgeschlossen.

## Patentansprüche

1. Verfahren zur Herstellung von Polyharnstoff Polyurethan-Formkörpern, die ein molares Dichteverhältnis von Knotendichte zu Harnstoffgruppendichte von 1:1 bis 8:1 aufweisen, durch Umsetzung einer Komponente (A) mit einer Polyisocyanatkomponente (B) und/oder einem Polyisocyanatprepolymer (C),
wobei die Komponente (A) aus
(A1) mindestens einem Polyetherpolyol mit einer OH-Zahl von 10 bis 100 und einer Funktionalität F von 1,95-4
(A2) mindestens einem Polyetherpolyol mit einer OH-Zahl von 101 bis 799 und einer Funktionalität F von 1,95-6
(A3) mindestens einem Vemetzerpolyol mit einer OH-Zahl von 800 bis 1200 und einer Funktionalität F von 2-4
(A4) mindestens einem Kettenverlängerungsmittel, das 1 bis 2 Alkylthio-Substituenten an einem aromatischen Ring trägt, und sich ableitet von Toluylendiaminen, aromatischen Diaminen auf Basis von Diphenylmethan oder aromatischen Polyaminen auf Basis höherer Homologer von Diphenylmethan, besteht
und die Polyisocyanatkomponente (B)
(B1) monomere Diphenylmethandüsocyanate und
(B2) höherkernige Homologe der Diphenylmethandüsocyanate enthält,
und das Polyisocyanatprepolymer (C) erhältlich ist aus
(C1) Isocyanaten auf Basis von Diphenylmethandüsocyanaten und gegebenenfalls deren höherkernigen Homologen,
(C2) Polyetherpolyolen.

2. Verfahren nach Anspruch 1, **dadurch gekennzeichnet, dass** bei der Umsetzung zusätzlich eine oder mehrere der Komponenten aus der Gruppe bestehend aus
(A6) Katalysatoren,
(A7) Treibmitteln,
(A8) Füllstoffen,
(A9) Flammschutzmitteln,
(A 10) Trennmitteln und
(A11) Zusatzstoffen
zugegeben werden.

3. Verfahren gemäß Anspruch 1, **dadurch gekennzeichnet, dass** als Kettenverlängerungsmittel (A4) Dimethylthiotoluylendiamine verwendet werden.

4. Verfahren gemäß Anspruch 1, **dadurch gekennzeichnet, dass** die Knotendichte des Polyurethan- Polyharnstoffs 0,6 mol/kg nicht unterschreitet und 3 mol/kg nicht überschreitet.

5. Verfahren gemäß Anspruch 1, **dadurch gekennzeichnet, dass** das molare Verhältnis von NCO-Gruppen der Komponente (B) und/oder (C) zu den funktionellen Gruppen der Komponenten (A1) bis (A4), die mit Isocyanaten reagieren können, zwischen 1:0,8 bis 1:1,3 eingestellt ist.

6. Polyharnstoff-Polyurethan-Fornkörper, die ein molares Dichteverhältnis von Knotendichte zu Harnstoffgruppendichte von 1:1 bis 8:1 aufweisen, erhältlich aus einer Komponente (A), einer Polyisocyanatkomponente (B) und/oder einer Polyisocyanatprepolymerkomponente (C),
wobei die Komponente (A) aus
(A1) mindestens einem Polyetherpolyol mit einer OH-Zahl von 10 bis 100 und einer Funktionalität F von 1,95-4
(A2) mindestens einem Polyetherpolyol mit einer OH-Zahl von 101 bis 799 und einer Funktionalität F von 1,95-6
(A3) mindestens einem Vernetzerpolyol mit einer OH-Zahl von 800 bis 1200 und einer Funktionalität F von 2-4
(A4) mindestens einem Kettenverlängerungsmittel, das 1 bis 2 Alkylthio-Substituenten an einem aromatischen Ring trägt und sich ableitet von Toluylendiaminen, aromatischen Diaminen auf Basis von Diphenylmethan oder aromatischen Polyaminen auf Basis höherer Homologer von Diphenylmethan, besteht
und die Polyisocyanatkomponente (B)
(B1) monomere Diphenylmethandüsocyanate und
(B2) höherkernige Homologe der Diphenylmethandüsocyanate enthält,
und das Polyisocyanatprepolymer (C) erhältlich ist aus
(C1) Polyisocyanaten auf Basis von Diphenylmethandüsocyanaten und gegebenenfalls
deren höherkernigen Homologen,
(C2) Polyetherpolyolen.

## Claims

1. Process for producing polyurea-polyurethane mouldings which have a molar density ratio of node density to urea group density of from 1:1 to 8:1, by reacting a component (A) with a polyisocyanate component (B) and/or a polyisocyanate prepolymer (C),
where the component (A) consists of
(A1) at least one polyether polyol having an OH number of from 10 to 100 and a functionality F of 1.95-4,
(A2) at least one polyether polyol having an OH number of from 101 to 799 and a functionality F of 1.95-6,
(A3) at least one crosslinker polyol having an OH number of from 800 to 1200 and a functionality F of 2-4,
(A4) at least one chain extender which bears from 1 to 2 alkylthio substituents on an aromatic ring and is derived from toluenediamines, aromatic diamines based on diphenylmethane or aromatic polyamines based on higher homologues of diphenylmethane,
and the polyisocyanate component (B) contains
(B1) monomeric diphenylmethane diisocyanates and
(B2) homologues of diphenylmethane diisocyanates having more than two rings,
and the polyisocyanate prepolymer (C) can be obtained from
(C1) isocyanates based on diphenylmethane diisocyanates and optionally homologues thereof having more than two rings,
(C2) polyether polyols.

2. Process according to Claim 1, **characterized in that** one or more components from the group consisting of
(A6) catalysts,
(A7) blowing agents,
(A8) fillers,
(A9) flame retardants,
(A10) mould release agents and
(A11) additives
are additionally added in the reaction.

3. Process according to Claim 1, **characterized in that** dimethylthiotoluenediamines are used as chain extenders (A4).

4. Process according to Claim 1, **characterized in that** the node density of the polyurethane-polyurea is not less than 0.6 mol/kg and does not exceed 3 mol/kg.

5. Process according to Claim 1, **characterized in that** the molar ratio of NCO groups of the component (B) and/or (C) to the functional groups of the components (A1) to (A4) which can react with isocyanates is set to from 1:0.8 to 1:1.3.

6. Polyurea-polyurethane mouldings which have a molar density ratio of node density to urea group density of from 1:1 to 8:1, which can be obtained from a component (A), a polyisocyanate component (B) and/or a polyisocyanate prepolymer component (C),
where the component (A) consists of
(A1) at least one polyether polyol having an OH number of from 10 to 100 and a functionality F of 1.95-4,
(A2) at least one polyether polyol having an OH number of from 101 to 799 and a functionality F of 1.95-6,
(A3) at least one crosslinker polyol having an OH number of from 800 to 1200 and a functionality F of 2-4,
(A4) at least one chain extender which bears from 1 to 2 alkylthio substituents on an aromatic ring and is derived from toluenediamines, aromatic diamines based on diphenylmethane or aromatic polyamines based on higher homologues of diphenylmethane,
and the polyisocyanate component (B) contains
(B1) monomeric diphenylmethane diisocyanates and
(B2) homologues of diphenylmethane diisocyanates having more than two rings,
and the polyisocyanate prepolymer (C) can be obtained from
(C1) polyisocyanates based on diphenylmethane diisocyanates and optionally homologues thereof having more than two rings,
(C2) polyether polyols.

## Revendications

1. Procédé pour la production de corps moulés en polyurée-polyuréthanne, qui présentent un rapport molaire de densités de la densité des points de jonction à la densité des groupes urée de 1:1 à 8:1, par mise en réaction d'un composant (A) avec un composant polyisocyanate (B) et/ou un prépolymère polyisocyanate (C),
le composant (A) étant constitué
(A1) d'au moins un polyétherpolyol ayant un indice de groupes OH de 10 à 100 et une fonctionnalité F de 1,95-4
(A2) d'au moins un polyétherpolyol ayant un indice de groupes OH de 101 à 799 et une fonctionnalité F de 1,95-6
(A3) d'au moins un polyol réticulant ayant un indice de groupes OH de 800 à 1 200 et une fonctionnalité F de 2-4
(A4) d'au moins un prolongateur de chaîne, qui porte 1 ou 2 substituants alkylthio sur un cycle aromatique et dérive de toluylènediamines, de diamines aromatiques à base de diphénylméthane ou de polyamines aromatiques à base d'homologues supérieurs de diphénylméthane,
et le composant polyisocyanate (B) contenant
(B1) des diphénylméthane-diisocyanates monomères et
(B2) des homologues à plus grand nombre de noyaux des diphénylméthanediisocyanates,
et le prépolymère polyisocyanate (C) pouvant être obtenu à partir
(C1) d'isocyanates à base de diphénylméthane-diisocyanates et éventuellement de leurs homologues à plus grand nombre de noyaux,
(C2) de polyétherpolyols.

2. Procédé selon la revendication 1, **caractérisé en ce que** dans la réaction on ajoute en outre un ou plusieurs des composants choisis dans le groupe constitué par
(A6) des catalyseurs,
(A7) des agents d'expansion,
(A8) des charges,
(A9) des agents ignifuges,
(A10) des agents de séparation et
(A11) des additifs.

3. Procédé selon la revendication 1, **caractérisé en ce qu'**on utilise comme prolongateur de chaîne (A4) des diméthylthiotoluylènediamines.

4. Procédé selon la revendication 1, **caractérisé en ce que** la densité de points de jonction de la polyuréthanne-polyurée n'est pas inférieure à 0,6 mole/kg et n'excède pas 3 moles/kg.

5. Procédé selon la revendication 1, **caractérisé en ce que** le rapport molaire des groupes NCO du composant (B) et/ou du composant (C) aux groupes fonctionnels des composants (A1) à (A4), qui peuvent réagir avec des isocyanates, est ajusté entre 1:0,8 et 1:1,3.

6. Corps moulés en polyurée-polyuréthanne, qui présentent un rapport de densités de la densité des points de jonction à la densité des groupes urée de 1:1 à 8:1, pouvant être obtenus à partir d'un composant (A), d'un composant polyisocyanate (B) et/ou d'un composant prépolymère polyisocyanate (C),
le composant (A) étant constitué
(A1) d'au moins un polyétherpolyol ayant un indice de groupes OH de 10 à 100 et une fonctionnalité F de 1,95-4
(A2) d'au moins un polyétherpolyol ayant un indice de groupes OH de 101 à 799 et une fonctionnalité F de 1,95-6
(A3) d'au moins un polyol réticulant ayant un indice de groupes OH de 800 à 1 200 et une fonctionnalité F de 2-4
(A4) d'au moins un prolongateur de chaîne, qui porte 1 ou 2 substituants alkylthio sur un cycle aromatique et dérive de toluylènediamines, de diamines aromatiques à base de diphénylméthane ou de polyamines aromatiques à base d'homologues supérieurs de diphénylméthane,
et le composant polyisocyanate (B) contenant
(B1) des diphénylméthane-diisocyanates monomères et
(B2) des homologues à plus grand nombre de noyaux des diphénylméthanediisocyanates,
et le prépolymère polyisocyanate (C) pouvant être obtenu à partir
(C1) d'isocyanates à base de diphénylméthane-diisocyanates et éventuellement de leurs homologues à plus grand nombre de noyaux,
(C2) de polyétherpolyols.
